# FASCICULE DE BREVET EUROPEEN

(11) **EP 4 267 413 B1**
(45) Date de publication et mention de la délivrance du brevet: **05.02.2025**
(21) Numéro de dépôt: 21848264.4
(22) Date de dépôt: 03.12.2021
(51) Int. Cl.: B60C 23/04, B60C 23/06, B60C 19/00

(54) **ORGANE ELECTRONIQUE TRANSMETTANT UNE INFORMATION D'IDENTIFICATION LORS D'UN CHANGEMENT D'ETAT**
ELEKTRONISCHES ELEMENT ZUR ÜBERTRAGUNG EINER IDENTIFIKATIONSINFORMATION WÄHREND EINES ZUSTANDSWECHSELS
ELECTRONIC MEMBER TRANSMITTING AN ITEM OF IDENTIFICATION INFORMATION DURING A STATE CHANGE

(30) Priorité: 22.12.2020 FR 2013931
(43) Date de publication de la demande: 01.11.2023
(73) Titulaire: COMPAGNIE GENERALE DES ETABLISSEMENTS MICHELIN, 63000 Clermont-Ferrand (FR)
(72) Inventeur: PERNOT, Alexandre, 63040 CLERMONT-FERRAND Cedex 9 (FR); MARTIN, Denis, 63040 CLERMONT-FERRAND Cedex 9 (FR)
(74) Mandataire: M.F.P. Michelin
(86) Numéro de dépôt international: PCT/FR2021/052194
(87) Numéro de publication internationale: WO 2022/136757

(56) Documents cités:
- EP-A1- 3 741 588
- WO-A1-2015/115581
- DE-A1- 102008 014 537
- US-A1- 2017 050 478
- US-A1- 2019 143 987

## Description

### Domaine de l'invention

La présente invention concerne un organe électronique soumis à un mouvement ou sensible à la proximité d'un objet ou d'une source, destinée par exemple à être incorporée dans un ensemble monté, afin de transmettre une information d'identification, par exemple l'identité des composants de l'ensemble monté, lors de la mise en mouvement de l'organe électronique ou lorsqu'une certaine proximité avec d'autres objets ou une source a été atteinte.

### Arrière-plan technologique

La connaissance de l'identité des composants de l'ensemble monté ou des objets d'un système est primordiale pour adapter les dispositifs, notamment électroniques, du système tels que les outils d'aide à la conduite des véhicules automobiles. En effet, ces dispositifs sont sensibles aux caractéristiques techniques des composants, en particulier celles de l'enveloppe pneumatique pour l'exemple des outils d'aide à la conduite. Ce composant comme l'enveloppe pneumatique est amené à évoluer avec le temps ou à être changé au cours de l'usage du système, il est donc important d'avoir accès régulièrement à l'identité du composant, et en particulier de l'enveloppe pneumatique qui est l'élément en contact direct avec la route dans le cas particulier des véhicules automobiles.

A ce jour, dans le cas des ensembles montés, la fonction d'identification peut être assurée électroniquement par exemple par l'intermédiaire d'une étiquette ou tag RFID (acronyme anglais de Radio Frequency IDentification) que l'on incorpore à l'ensemble monté. Un exemple de tag RFID applicable à l'enveloppe pneumatique est illustrée dans la publication FR2901422A1. Ce tag RFID est un organe électronique passif qui reçoit un signal radiofréquence d'interrogation de la part d'un lecteur externe à l'ensemble monté. L'énergie du signal d'interrogation sert à alimenter l'organe électronique et à émettre un signal radiofréquence en retour contenant l'information sur l'identité de l'enveloppe pneumatique par exemple. Ainsi, l'information est donnée en réponse à un ordre reçu par l'utilisateur qui active le lecteur radiofréquence.

En raison des caractéristiques des mélanges élastomères de l'enveloppe pneumatique et dans un souci de facilité d'intégration du tag RFID dans l'enveloppe pneumatique, il est usuel d'employer la bande de fréquences aux alentours de 900MHz qui correspond au meilleur compromis entre une petite dimension de l'antenne radiofréquence, ce qui préserve l'intégrité physique de l'étiquette RFID, et une bonne qualité du signal radiofréquence en retour.

Cependant, la lecture de l'étiquette RFID est généralement faite lorsque l'enveloppe pneumatique est statique, c'est-à-dire à l'arrêt ou pseudo arrêt afin d'optimiser la transmission d'énergie vers l'étiquette RFID. Qui plus est, l'émission des ondes radioélectriques est gouvernée par des normes précises d'émission qui limitent la puissance d'émission, ce qui réduit les distances de lectures des étiquettes RFID. De ce fait, si on souhaite identifier les quatre ensembles montés du véhicule à partir de la structure même du véhicule il est nécessaire de multiplier les lecteurs au mieux un lecteur par train du véhicule, au pire un lecteur par ensemble monté. Ainsi un tel dispositif ne remplit pas les exigences d'industrialisation sur le véhicule en raison des contraintes d'implantation du système de radiocommunication et d'automatisation recherchée de la fonction d'information sur l'ensemble monté.

De tels organes électroniques sont décrits, par example, dans les demandes WO2015/115581A2 ou EP3741588A1.

La présente invention a pour objectif de définir un organe électronique permettant de transmettre une information d'identification lorsqu'un événement se produit tel qu'un changement d'état de l'organe électronique, en particulier pour l'ensemble monté, à des moments particuliers comme celui correspondant à la mise en rotation de l'ensemble monté du véhicule afin d'asservir au mieux les dispositifs électroniques du système comme un véhicule dépendants des caractéristiques de l'ensemble monté. Le système autour de cet organe doit aussi être compétitif d'un point économique et industriel. La présente invention cherche donc à résoudre l'ensemble des inconvénients que subit l'étiquette usuelle RFID tout en restant fiable au cours de la durée de vie du composant dans le système.

### Description de l'invention

L'invention porte sur un premier objet qui est un organe électronique, tel que défini à la revendication 1.

Ici, on entend par le terme « signal sensible au mouvement de l'organe électronique » que soit l'amplitude du signal est directement proportionnelle au mouvement ou que soit la forme du signal reflète une information indirecte sur le mouvement de l'organe électronique. Ce mouvement est une translation suivant une direction donnée et/ou une rotation de l'organe électronique autour d'un axe de rotation. Pour expliciter le premier cas de la sensibilité au mouvement du capteur, cela peut être par exemple la réponse temporelle d'un accéléromètre suivant la direction radiale par rapport à un axe de rotation de l'organe électronique piloté par le carré de la vitesse de rotation ou de l'évolution directe de la vitesse angulaire fournie par un gyromètre. Dans le second cas, cela peut s'agir par exemple de l'évolution temporelle d'un codeur rotatif.

Ici, on entend par le terme « signal sensible à la distance dudit capteur par rapport à un objet extérieur » que soit l'amplitude du signal est directement proportionnelle à la distance ou que soit la forme du signal reflète une information indirecte sur la proximité de l'organe électronique par rapport à cet objet. Cette distance est matérialisée par un signal optique et/ou sonore et/ou électromagnétique et/ou mécanique.

On entend ici par le terme « microprocesseur » un dispositif électronique qui est constitué d'une puce électronique ayant des capacités de calculs élémentaires éventuellement un convertisseur analogique/numérique selon la nature des valeurs fournies par le capteur. Le microprocesseur est couplé à un espace mémoire pour effectuer par exemple des manipulations sur des données. Le microprocesseur joue le rôle de chef d'orchestre de l'organe électronique en activant les divers systèmes, comme le capteur sensible au mouvement ou le capteur de proximité si ceux-ci nécessitent par exemple de l'énergie pour fonctionner, et comme, potentiellement, selon les résultats intermédiaires qu'il aura obtenus, émettre l'information d'identification contenue dans l'espace mémoire de l'organe électronique à un instant donné. En particulier, il lance et cadence l'émission radiofréquence de l'organe électronique par l'intermédiaire de la gestion de l'émetteur radiofréquence. Enfin, il est connecté à une source d'énergie pour effectuer ses tâches ou celles de composants qui lui sont liés. Cette source d'énergie, que cela soit une batterie ou un accumulateur d'énergie, telle qu'une capacité, alimenté par un dispositif de génération d'énergie, tel qu'un composant piézoélectrique, peut aussi alimenter directement en énergie les composants en lien avec le microprocesseur.

On entend par le terme « changement d'état prédéterminé », un ou plusieurs changements d'état possibles de l'organe électronique qui ont été renseignés de façon spécifique pour effectuer une tâche au microprocesseur liée à ce changement d'état de l'organe électronique. En effet, l'organe électronique étant classé selon p états différents, il existe p*(p-1) changements d'état possibles en prenant en compte le sens du passage de changement d'état. Par exemple, si l'organe électronique est défini selon deux états E0 et E1, il existe deux changements possibles, le passage de E0 vers E1 et le passage de E1 vers E0. Parmi ces p*(p-1) changements d'état possibles on en sélectionne une partie afin de constituer la liste des changements d'état prédéterminés. Ce n'est que les changements d'état de cette liste qui entrainera une action du microprocesseur en termes d'émission radiofréquence de l'information d'identification.

L'organe électronique répond aux exigences fonctionnelles demandées. En effet, il émet systématiquement un signal radiofréquence s'il détecte un changement d'état prédéterminé de l'organe électronique pour lequel il a été programmé. Ce changement d'état se concrétise au travers du signal du capteur aussi bien par sa forme que par son amplitude potentiellement. Par conséquent le traitement de ce signal de données permet de déterminer l'état de l'organe électronique en temps réel même si l'organe est en mouvement. De plus il répond aux exigences d'autonomie et émettant le signal radiofréquence que sur un laps de temps ΔT après détection du changement d'état de l'organe électronique. Par conséquent, pour les véhicules particuliers par exemple, il reste majoritairement dans un mode non émetteur, donc naturellement économe en énergie en n'émettant pas de signal radiofréquence. De plus, il ne reprendra pas sa fonction d'émission tant qu'un nouveau changement d'état prédéterminé n'a été obtenu. Enfin, il est efficace sur sa puissance d'émission puisque la source d'énergie lui procure toute la puissance de transmission nécessaire et disponible selon les normes d'émission contrairement aux dispositifs passifs dont seule une partie de l'énergie émise par le lecteur externe et reçue par le dispositif passif sert à l'émission radiofréquence. Par conséquent, l'émission du signal est optimisée et par conséquence de plus longue distance ce qui permet de limiter le nombre de systèmes récepteurs comme par exemple dans un véhicule. De plus, le système embarqué dans le véhicule ne sert qu'à la réception et non à l'émission, il est de plus peu énergivore, contrairement à une solution avec un organe électronique passif. En cela, il répond aux contraintes de compétitivité concernant l'écosystème de l'organe électronique.

Bien entendu, le laps de temps ΔT d'émission du signal radiofréquence peut être définie selon l'état de l'organe électronique dans lequel il est au moment de l'émission. Ainsi, ce laps de temps ΔT peut être identique pour plusieurs états de l'organe électronique ou être différent pour chaque état de l'organe électronique. La programmation de ce laps de temps peut être effectué par des moyens de communication filaires ou sans fil entre l'organe électronique et le programmateur. Cependant, par défaut, une valeur forfaitaire pour ce laps de temps ΔT est renseignée en dur dans l'organe électronique.

Avantageusement, l'amplitude de la au moins une partie du signal de données constituant une information servant à déterminer l'état de l'organe électronique, chaque état de l'organe électronique étant limité, sur la au moins une partie du signal de données, par au moins une première valeur limite et l'organe électronique étant dans un état donné, le franchissement de la au moins une première valeur limite par au moins une valeur de la au moins une partie du signal de données caractérise le changement d'état de l'organe électronique.

Très avantageusement, la au moins une première valeur limite est, une valeur définie à partir d'au moins une distance critique ou une vitesse critique ou une accélération critique.

Le microprocesseur ayant des moyens de comparaison par nature, il peut détecter le franchissement d'une première valeur limite voire le sens de franchissement de cette première valeur limite. Selon la nature du capteur de l'organe électronique, deux alternatives existent pour caractériser le passage d'un état à l'autre de l'organe électronique.

Dans le cas où l'amplitude du signal est le vecteur portant l'information sur le mouvement ou la proximité de l'organe électronique, c'est le franchissement de la première valeur limite par les valeurs du signal de données qui caractérise l'état dans lequel se trouve l'organe électronique. Ce premier seuil, la première valeur limite, détermine le passage à l'état suivant de l'organe électronique. Si l'amplitude du signal de données est proportionnelle à la vitesse de l'organe électronique, la première valeur limite est la vitesse critique. Si l'amplitude du signal est une fonction de la vitesse de l'organe électronique comme par exemple le carré de la vitesse de rotation dans le cas de l'accélération suivant une direction radiale à l'axe de rotation, la première valeur limite est proportionnelle au carré de la vitesse critique. Cependant dans le cas des capteurs de proximité, mais pas seulement, la première valeur limite peut est fonction d'une distance critique. Enfin, la première valeur limite peut aussi être fonction d'une accélération critique. Cependant, il est possible aussi de rentrer une valeur forfaitaire pour cette première valeur limite.

Avantageusement, la répétition d'un motif sur la au moins une partie du signal de données constituant une information servant à déterminer l'état de l'organe électronique et l'organe électronique étant dans un état donné, le franchissement d'un nombre N de motif observé pendant une durée ΔT' sur la au moins une partie du signal de données caractérise un changement d'état de l'organe électronique.

Très avantageusement, la durée ΔT' est proportionnelle à l'inverse d'une seconde vitesse critique de l'organe électronique.

Dans le cas des capteurs dont le forme et non l'amplitude du signal reflète de façon indirecte le mouvement de l'ensemble monté ou la proximité de l'organe électronique par rapport à un autre objet, le passage à l'état suivant correspond à l'atteinte d'un certain niveau de périodicité du signal du capteur. Ainsi, la durée ΔT' correspond à cette périodicité critique, par exemple en lien avec une vitesse critique, traduisant le passage à l'état suivant. La pseudo périodicité du signal de données dans ce cas-là impose par exemple de prendre en compte le franchissement d'une valeur seuil. En particulier cette valeur seuil doit représenter sur le motif une certaine bijectivité afin d'identifier ainsi le motif comme par exemple la réponse d'un accéléromètre monté sur un objet faiblement déformable comme une roue au cours d'un roulage Si on prend aussi en compte le sens de franchissement de cette valeur seuil, une double détection sur la durée ΔT' illustre le passage à l'état suivant. Si, on ne prend pas en compte le sens de franchissement, la triple détection au cours de la durée ΔT' sera le déclencheur du passage à l'état suivant de l'organe électronique.

De plus, le motif n'a pas nécessairement le besoin d'être constant au cours du fonctionnement de l'organe électronique, une certaine transformation de ce motif aussi bien dans son évolution temporelle que dans son amplitude peut être tolérée tant que sa forme générale puisse être identifiable.

Enfin, la durée ΔT' peut bien être un multiple de la seconde vitesse critique fonction de la périodicité du motif. Cependant, il est préférable que cette durée soit aussi la plus faible possible pour effectuer une détection rapide du changement d'état de l'organe électronique et ne pas être faussée par une évolution trop rapide du mouvement de l'organe électronique ou d'un rapprochement rapide de l'organe électronique par rapport à un objet extérieur. Par exemple, si la durée ΔT'est la périodicité critique, la détection d'au plus un motif pendant la durée ΔT' sur le signal de données assure d'être en dessous de la périodicité critique et par conséquent dans un premier état donné. Et inversement, la détection d'au moins deux motifs pendant cette même durée ΔT'assure d'être au-dessus de la périodicité critique. Et par voie de conséquence l'organe électronique se trouve dans un second état.

Afin d'évaluer le changement d'état de l'organe électronique, on observe le signal de données issues du capteur sur une durée ΔT' . Cette durée ΔT', en général, traduit, dans certaines applications notamment pour la détection de mouvement, une périodicité de l'organe électronique, que cela soit une période de rotation d'un ensemble monté ou d'une machine tournante ou que cela soit la période d'un cycle de mouvement ou d'actions. De ce fait, si on identifie une vitesse critique correspondant au passage à un certain niveau de périodicité de l'organe électronique, nécessairement la durée ΔT' serait déterminée, par exemple, par le rapport entre la distance curviligne générée par l'organe électronique au cours d'une rotation sur la vitesse de mise en rotation critique. Si sur cette période de temps, la périodicité du signal du capteur est supérieure, alors l'organe électronique a changé d'état, le changement d'état traduisant alors une modification de la périodicité de l'organe électronique.

Préférentiellement, le au moins un capteur de mouvement est compris dans le groupe comprenant les capteurs inertiels, comme l'accéléromètre, le gyromètre, le gyroscope, et les capteurs angulaires comme le codeur rotatif et le magnétomètre

Ces capteurs sont tous sensibles au mouvement de l'organe électronique que ce mouvement soit de translation ou de rotation, soit par la forme du signal comme le codeur rotatif ou le gyroscope, soit par l'amplitude du signal comme l'accéléromètre ou le gyromètre. Le cas particulier de l'accéléromètre qui est à la fois potentiellement sensible au mouvement par l'intermédiaire de son amplitude mais aussi de sa forme dans le cas où celui-ci est monté sur un objet déformable qui est en rotation, comme par exemple une enveloppe pneumatique.

Préférentiellement, le au moins un capteur de proximité est compris dans le groupe comprenant les capteurs optiques telle que les capteur photoélectrique ou cellule photoconductrice ou photodiode, les capteurs électromagnétiques comme par exemple les capteurs à effet Hall, les capteurs inductifs comme les capteurs à reluctance variable ou à courant de Foucault, les capteurs capacitifs, les capteurs acoustiques comme par exemple les capteurs ultrasons ou les microphones, les capteurs micro-ondes et les boutons-poussoirs.

Ces capteurs sont tous sensibles à la proximité de l'organe électronique par rapport à un autre objet que cette proximité soit évaluée par de la lumière, des ondes électromagnétiques ou sonores voire un contact entre les solides.

Les durées spécifiques pour déterminer le changement d'état de l'organe électronique sont soit entrées en valeur fixe au sein de l'organe électronique en précisant aussi une valeur limite pour chaque changement d'état prédéterminé, soit évaluées par le traitement de la au moins une partie du signal de données issue du capteur. Bien entendu, les deux valeurs limites pour le passage entre deux états et pour les deux sens de passage, de l'état « i » vers l'état « j » et de l'état « j » vers l'état « i » peuvent être identiques. Cependant, on peut aussi définir une valeur limite spécifique pour chaque sens de passage.

Selon l' invention, le laps de temps ΔT d'émission du signal radiofréquence est comprise entre 10 secondes et 10 minutes, voire entre 20 secondes et 10 minutes, préférentiellement entre 30 secondes et 7 minutes ou 5 minutes, très préférentiellement il est compris entre 1 minute et 5 minutes.

L'une des problématiques de l'organe électronique est son autonomie énergétique. De plus, il n'est pas nécessaire de transmettre l'information d'identification au-delà du juste nécessaire. En effet, la transmission radiofréquence est un poste énergivore de l'organe électronique. Il faut que l'organe électronique remplisse sa fonction de transmission lorsque l'organe électronique change d'état et que ce sens de changement d'état nécessite une émission radiofréquence. Ceci justifie la présence d'un laps de temps d'émission qui doit être court. Mais, l'organe électronique est potentiellement en mouvement au moment de son émission radiofréquence. De plus, l'émission peut être perturbée par l'environnement extérieur de l'organe électronique. Enfin, on peut aussi décider d'orienter spatialement l'émission radiofréquence par l'intermédiaire de l'antenne qui devient alors directionnelle. Cette antenne directionnelle peut être mobile ou multiple pour émettre sur des zones géographiques différentes. L'autre intérêt des antennes directionnelles est la portée de l'émission radiofréquence qui devient plus longue De ce fait, pour toutes ses options, il faut définir un certain laps de temps pour être sûr que la transmission de l'information d'identification vers l'extérieur de l'organe électronique s'est bien passée. Il s'avère qu'un laps de temps de 20 secondes est une limité basse et qu'il est plus efficace que ce laps de temps soit d'au moins 30 secondes ou une minute pour obtenir une qualité de communication radiofréquence notamment lorsque l'organe électronique est dans un état dynamique. En effet dans un état dynamique, l'organe électronique a besoin d'un temps d'émission allongée pour s'affranchir des zones blanches de communication radiofréquence en raison de la mise en mouvement de l'organe électronique par exemple La meilleur compromis identifié, dans le cas d'une application de l'organe électronique au pneumatique d'un véhicule terrestre, correspond à un laps de temps compris entre 1 minute et 5 minutes permettant une redondance d"informations transmises par onde radio de qualité suffisante pour transmettre à coup sûr l'information d'identification.

Selon un mode de réalisation très privilégié, l'émission du signal radiofréquence au cours du laps de temps ΔT s'effectue périodiquement sur une période T, préférentiellement comprise entre 0,5 secondes et 1 minute.

Préférentiellement, la période T est définie selon l'état de l'organe électronique.

Ainsi l'émission radiofréquence n'est pas continue, ce qui permet d'économiser de l'énergie et d'améliorer l'autonomie de l'organe électronique mais devient périodique. La périodicité peut être fonction de la vitesse de rotation de l'organe électronique. Dans le cas de l'ensemble monté, une périodicité comprise entre 0, 5 et 5 secondes est préférée pour les ensembles montés pour véhicule terrestre ou aérien. Cependant, certain état de l'organe électronique ne nécessite pas une telle périodicité comme par exemple si l'organe électronique est un fonctionnement normal ou au repos, c'est-à-dire sans mouvement par exemple, une périodicité d'une minute est alors suffisante. Enfin, la période T d'émission du signal radiofréquence peut aussi évoluer selon l'état dans lequel se trouve l'organe électronique. Il conviendra alors de préciser les périodes associées à chaque état au niveau de l'espace mémoire de l'organe électronique. En particulier, chaque état de l'organe électronique ou changement d'état prédéterminée peut engendrer une définition du laps de temps ΔT d'émission radiofréquence et de la périodicité T du signal radiofréquence.

Préférentiellement, le signal radiofréquence a une fréquence d'émission compris entre 2400 et 2482 MHz.

Cette bande de fréquences correspond à celle employée par la technologie BLE (acronyme en anglais de Bluetooth Low Emission) qui est un standard de communication mondiale permettant une transmission longue distance en minimisant les interférences avec le milieu externe, notamment les matériaux conducteurs. De plus, l'antenne de communication, dans le cas par exemple des antennes dipôles, a généralement une dimension caractéristique proportionnelle à l'inverse de la fréquence de communication, ce qui engendre de petites dimensions d'antennes facilitant l'intégration de l'organe électronique au sein d'une multitude d'objets, en particulier les enveloppes pneumatiques.

L'invention porte aussi sur un second objet qui est une enveloppe pneumatique comprenant un organe électronique, comprenant au moins les caractéristiques techniques du premier objet de l'invention, monté solidairement sur ladite enveloppe pneumatique, et dans lequel la au moins une information d'identification est comprise dans le groupe comprenant le numéro de série de l'enveloppe pneumatique, l'identité de l'enveloppe pneumatique, le numéro de série de l'organe électronique et l'identité de l'organe électronique.

L'invention porte aussi sur un troisième objet qui est une bande transporteuse comprenant un organe électronique comprenant au moins les caractéristiques techniques du premier objet de l'invention, monté solidairement sur ladite bande transporteuse et dans lequel la au moins une information d'identification est comprise dans le groupe comprenant le numéro de série de la bande transporteuse, l'identité de la bande transporteuse, le numéro de série de l'organe électronique et l'identité de l'organe électronique.

L'invention porte aussi sur un quatrième objet qui est une chenille, c'est-à-dire une bande sans fin souple interposée entre le sol et les roues d'un véhicule pour assurer la traction dans des terrains à faible coefficient d'adhérence, comprenant un organe électronique comprenant au moins les caractéristiques techniques du premier objet de l'invention, monté solidairement sur ladite chenille et dans lequel la au moins une information d'identification est comprise dans le groupe comprenant le numéro de série de la chenille, l'identité de la chenille, le numéro de série de l'organe électronique et l'identité de l'organe électronique.

L'invention porte aussi sur un cinquième objet qui est une roue comprenant un organe électronique comprenant au moins les caractéristiques techniques du premier objet de l'invention, monté solidairement sur ladite roue et dans lequel la au moins une information d'identification est comprise dans le groupe comprenant le numéro de série de la roue, l'identité de la roue, le numéro de série de l'organe électronique et l'identité de l'organe électronique.

L'invention porte enfin sur un sixième objet qui est un ensemble monté comprenant un organe électronique, comprenant au moins les caractéristiques techniques du premier objet de l'invention, monté solidairement sur ledit ensemble monté et dans lequel, la au moins une information d'identification est compris dans le groupe comprenant le numéro de série de l'enveloppe pneumatique, l'identité de l'enveloppe pneumatique, le numéro de série de la roue, l'identité de la roue, le numéro de série de l'organe électronique et l'identité de l'organe électronique.

### Description brève des dessins

L'invention sera mieux comprise à la lecture de la description qui va suivre dans les cas, principalement, d'une application de type ensemble monté. Ces applications sont données uniquement à titre d'exemple et faites en se référant aux figures annexées dans lesquelles :
- La Fig 1 est un schéma simplifié d'un organe électronique selon un mode de réalisation du premier objet de l'invention.
- La Fig. 2 est un ensemble monté comprenant une enveloppe pneumatique équipé d'un organe électronique selon le second objet de l'invention et une roue.
- La Fig. 3a est un signal temporel en sortie d'un codeur rotatif d'un organe électronique monté sur une enveloppe pneumatique d'un ensemble monté en condition de roulage selon le second objet de l'invention.
- La Fig. 3b. est un signal temporel en sortie d'un accéléromètre d'un organe électronique monté sur une roue d'un ensemble monté en condition de roulage selon le cinquième objet de l'invention.
- La Fig. 3c est un signal temporel, représentatif d'un capteur de proximité, en sortie d'un organe électronique monté sur un ensemble monté à proximité d'un objet selon le cinquième objet de l'invention
- La Fig. 3d est un signal temporel en sortie d'un accéléromètre d'un organe électronique monté sur une enveloppe pneumatique d'un ensemble monté en condition de roulage selon le second objet de l'invention.

### Description détaillée de modes de réalisation

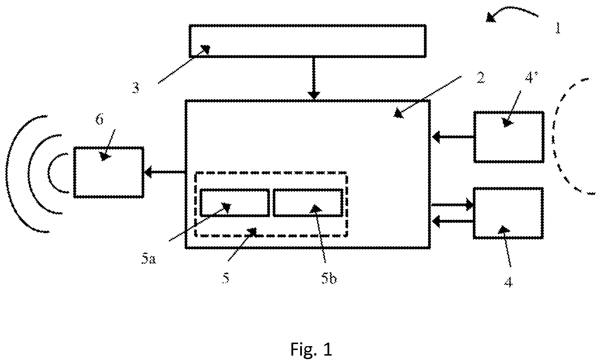

La figure 1 montre un schéma simplifié d'un organe électronique 1 selon l'invention. Ce système comprend un microprocesseur 2 couplé à une source d'énergie 3 qui peut être une batterie ou un accumulateur d'énergie alimenté par exemple par un élément piézoélectrique. Le microprocesseur 2 est en communication avec un capteur de mouvement 4 sensible au mouvement de l'organe électronique, ici à la vitesse de rotation autour d'un axe de rotation prédéfinie, ce qui justifie le positionnement et l'orientation du capteur de mouvement 4 par rapport au support de fixation de l'organe électronique 1, non représenté sur ce schéma. Ici dans cet exemple, le microprocesseur 2 pilote l'acquisition du capteur de mouvement 4 en lui transmettant l'ordre d'acquisition et récupère les données issues du capteur 4. De même, le microprocesseur 2 est en liaison avec le capteur de mobilité 4' qui est ici un capteur ultrasons sensibles à une source à ultrasons émettant un bruit calibré. L'émission de la source est ici représentée par la courbe pontillé. La liaison avec ce second capteur 4' est ici unidirectionnelle puisque le capteur est passif. De plus, le capteur 4', et donc l'organe électronique 1, est proche de la source à ultrasons, plus fort est le signal enregistré par le capteur 4'. L'analyse de ce signal permet de déduire la distance séparant l'organe électronique 1 de la source à ultrasons.

Le microprocesseur 2 est connecté à un premier espace de mémoire 5a permettant le stockage d'une partie des données issues du capteur afin d'effectuer des opérations dessus pour définir l'état de rotation de l'organe électronique 1. Préférentiellement, cette espace mémoire 5a est de type mémoire flash ou mémoire RAM. Le microprocesseur 2 peut aussi être en lien avec un second espace mémoire 5b contenant l'information d'identification portée par l'organe électronique 1 ainsi que les changements d'état prédéterminés. Préférentiellement, cette espace mémoire 5b est de type mémoire morte, c'est à- dire bloquée en écriture éventuellement réinscriptible de type EPROM ou EEPRO. Les deux espaces mémoires 5a et 5b correspond à l'espace mémoire 5 de l'organe électronique 1. Cependant, si le microprocesseur 2 possède suffisamment de mémoire cache, l'ensemble de l'espace mémoire 5 de l'organe électronique peut se situer alors au niveau du microprocesseur 2 afin d'optimiser les temps de réponse.

Enfin, le microprocesseur 2 est en communication avec un émetteur de radiocommunication 6 recevant l'énergie nécessaire à l'émission, l'information d'identification à transmettre et éventuellement la périodicité d'émission à effectuer de la part du microprocesseur 2. L'émetteur de radiocommunication 6 code l'information en signal radiofréquence et l'émet par l'intermédiaire d'une ou plusieurs antennes émettrices. Préférentiellement, l'émetteur de radiocommunication 6 fonctionne dans la bande UHF (acronyme d'Ultra Hautes Fréquences), et particulièrement dans la bande des 2,4 GHz correspondant à la bande utile de la technologie BLE. Bien entendu, l'émetteur de radiocommunication 6 peut avoir une liaison bidirectionnelle avec le microprocesseur afin de modifier les paramètres de l'organe électronique telles que les informations d'identification et les changements d'états prédéterminées en fonction du support physique sur lequel l'organe électronique sera monté solidairement. Ainsi, une programmation à distance et lors de l'installation ou postérieur à l'installation de l'organe électronique sur le support physique peut être entrepris ce qui facilité l'industrialisation des supports physiques équipés de tel organe électronique.

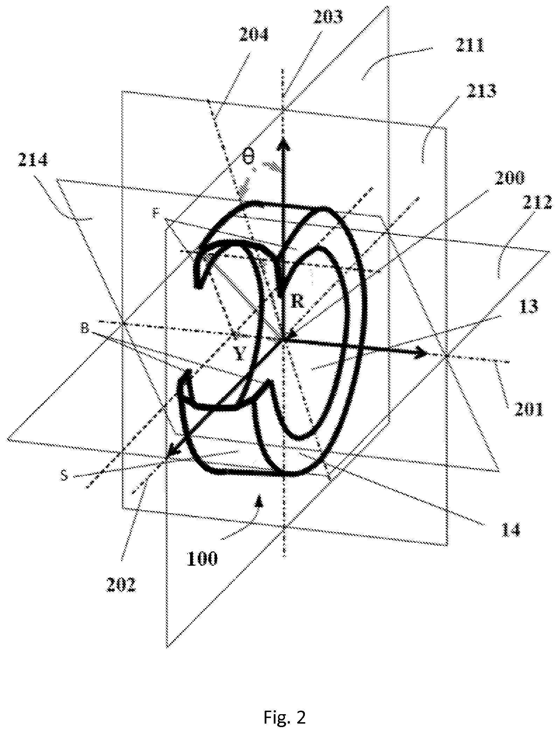

La figure 2 présente une coupe d'une enveloppe pneumatique 100 selon le second objet de l'invention. L'enveloppe pneumatique 100 comprend un sommet S prolongé par deux flancs F et se terminant par deux bourrelets B. En l'espèce, le pneumatique 100 est destiné à être monté sur une roue de véhicule de type véhicule particulier ou poids lourd, qui n'est pas représentée sur cette figure, au niveau des deux bourrelets B. On délimite ainsi une cavité C fermée, contenant au moins un fluide sous pression, délimitée à la fois par la surface intérieure 13 de l'enveloppe pneumatique 100 et par la surface externe de la roue du véhicule. La surface externe de l'enveloppe pneumatique 100 est notée 14.

On notera l'axe de référence 201 correspondant à l'axe naturelle de rotation de l'enveloppe pneumatique 100 ou de l'ensemble monté et le plan médian 211, perpendiculaire à l'axe de référence 201 et équidistant des deux bourrelets B. L'intersection de l'axe de référence 201 par le plan médian 211 détermine le centre de l'enveloppe pneumatique 200. On définira un repère cartésien au centre de l'enveloppe pneumatique 200 constitué de l'axe de référence 201, d'un axe vertical 203 perpendiculaire au sol et d'un axe longitudinal 202 perpendiculaire aux deux autres axes. Et, on définira le plan axial 212 passant par l'axe de référence 201 et l'axe longitudinal 202, parallèle au plan du sol et perpendiculaire au plan médian 211 Enfin on appellera plan vertical 213, le plan perpendiculaire à la fois au plan médian 211 et au plan axial 212 passant par l'axe vertical 203.

Tout point matériel de l'enveloppe pneumatique 100 est défini de façon unique par ses coordonnées cylindriques (Y, R, θ). Le scalaire Y représente la distance axiale au centre de l'enveloppe pneumatique 200 dans la direction de l'axe de référence 201 définie par la projection orthogonale du point matériel de l'enveloppe pneumatique 100 sur l'axe de référence 201. On définira un plan radial 214 faisant un angle θ par rapport au plan vertical 213 autour de l'axe de référence 201. Le point matériel de l'enveloppe pneumatique 100 est repéré dans ce plan radial 214 par la distance R au centre du bandage pneumatique dans la direction perpendiculaire à l'axe de référence 201 identifiée par la projection orthogonale de ce point matériel sur l'axe radial 204.

L'enveloppe pneumatique 100 comprend au droit de son sommet S sur la surface intérieure 13 de l'enveloppe pneumatique, un organe électronique correspondant au premier objet de l'invention. L'organe électronique est fixé sur la surface intérieure 13 de l'enveloppe pneumatique 100 par l'intermédiaire d'un patch en mélange élastomère bien connu de l'homme du métier. L'organe électronique comprend ici comme capteur sensible au mouvement un accéléromètre monoaxe dont l'axe principal est positionné perpendiculairement à la surface intérieure 13 de l'enveloppe pneumatique 100. Ainsi, le capteur délivre comme signal l'accélération dans la direction radiale par rapport à l'axe naturel de rotation 201 de l'ensemble monté.

Bien entendu, l'organe électronique peut aussi être équipé d'un accéléromètre triaxe dont les axes ne sont pas colinéaires entre eux. A ce moment-là, il est tout à fait possible connaissant la position géométrique de ces trois axes par rapport à la surface intérieure 13 de l'enveloppe pneumatique de définir l'accélération radiale subie par l'organe électronique. Donc, il est utile de connaitre le positionnement de l'organe électronique par rapport au support physique, ici l'enveloppe pneumatique 100, pour délivrer un signal utile. Cependant, dans le cadre de la détermination du mouvement de l'organe électronique, il est préférable mais non indispensable de déterminer l'accélération radiale, une erreur d'inclinaison ne modifie en rien la capacité de l'organe électronique à déterminer son état de rotation, il faut alors adapter les paramètres de détection comme la première ou la seconde valeur limite. De même, il est préférable de positionner l'organe électronique au droit du bloc sommet S de l'enveloppe pneumatique 100. Cependant, rien n'empêche de le positionner sur le flanc F ou le bourrelet B de l'enveloppe pneumatique 100.

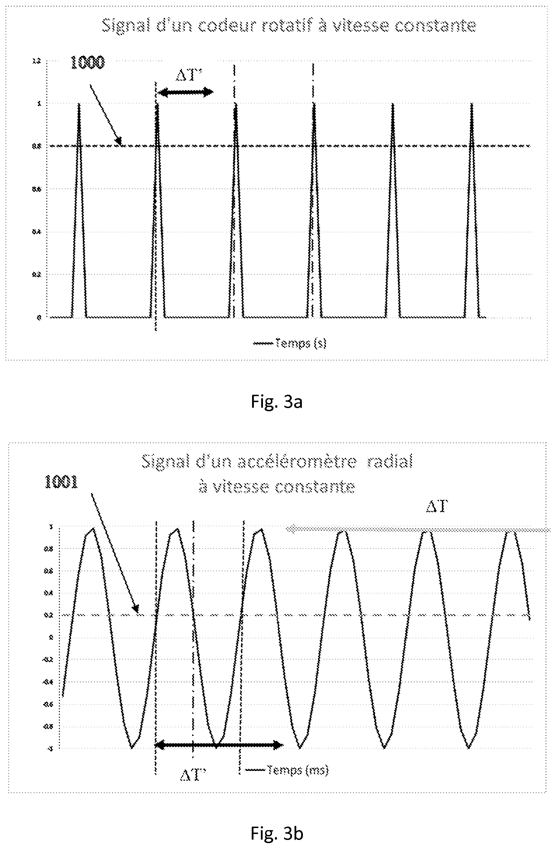

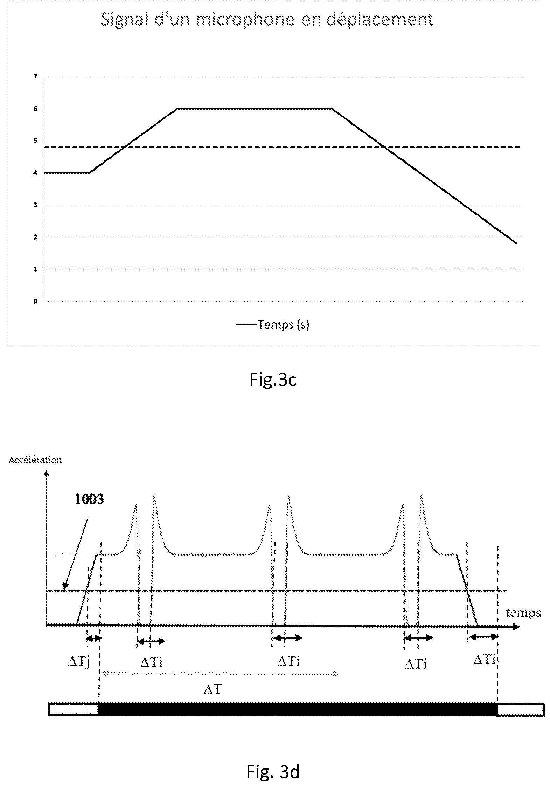

Les figures 3 sont des représentations temporelles de divers capteurs sensibles au mouvement de l'organe électronique ou de sa proximité avec des objets lorsque celui-ci est rendu solidaire sur des supports physiques qui sont des composants de l'ensemble monté, comme par exemple au niveau de la roue ou de l'enveloppe pneumatique.

La fig. 3a est la réponse temporelle d'un codeur rotatif de l'organe électronique monté sur une enveloppe pneumatique lors de la rotation de l'ensemble monté à vitesse constante. Le signal se présente sous la forme d'un peigne de Dirac. Chaque Dirac représente un tour compet de l'organe électronique autour de l'axe de rotation de l'enveloppe pneumatique. Ce signal de données est borné par la valeur unitaire. La périodicité critique pour identifier un changement d'état prédéterminée de l'enveloppe pneumatique est ici représentée par l'intervalle temporelle ΔT' qui commence temporellement au niveau du Dirac. Pour l'analyse du signal, on a défini une valeur seuil de 0,8 et en prenant que le franchissement par le haut de cette valeur seuil comme point de départ de la base de temps de l'intervalle temporelle ΔT'.

Pour constituer un changement d'état de l'organe électronique et donc de l'enveloppe pneumatique, c'est-à-dire un changement de vitesse de rotation, il faut que le motif du signal tour de roue se répète au moins une fois au cours de la période ΔT'. Ici, l'identification du motif passe par la détection de la valeur seuil qui est une valeur bijective représenté par la courbe horizontale 1000 en trait pointillé. De plus, en prenant le sens de franchissement de la valeur seuil de 0,8, il faut deux franchissements au cours de la période ΔT' pour déterminer le changement d'état de l'organe électronique monté solidairement sur l'enveloppe pneumatique, sans le sens de franchissement, il faudrait 3 franchissements de la valeur seuil. Ici, ce n'est pas le cas puisqu'un seul franchissement par le haut est observé. L'organe électronique et donc l'enveloppe pneumatique ne change pas d'état et donc, l'organe électronique ne déclenche pas l'émission radiofréquence

La figure 3b correspond au signal de données temporelles d'un organe électronique monté sur une roue d'un ensemble monté. Le dit ensemble monté est en condition de roulage à vitesse constante. Ici, le signal de données est représentatif du signal d'un accéléromètre selon la direction radiale de l'ensemble monté par rapport à l'axe naturelle de rotation de l'ensemble monté.

La détermination du changement d'état de l'organe électronique est de ce fait le changement d'état de l'objet, ici l'ensemble monté, sur lequel l'organe électronique est monté solidairement peut s'effectuer au travers de l'amplitude des valeurs du signal de données mais aussi la forme même du signal de données en raison de l'influence de la gravité terrestre sur l'amplitude du signal. En effet, au cours d'une rotation de l'ensemble monté, les positions verticales extrêmes représentent les minimas et maximas d'amplitude de l'accélération radiale ce qui permet de détecter des tours de roues. A l'inverse, les positions verticalement médianes de l'accéléromètre au cours du tour de roue représentent les valeurs centrales du signal entre les minimas et les maximas. Bien entendu, si l'accélération radiale de l'ensemble monté n'est pas constante, le signal est perturbé par une porteuse liée à l'accélération radiale instantanée de l'organe électronique.

En prenant en compte le fait qu'on est ici à vitesse de rotation constante, on détermine une durée ΔT' correspondant au passage à un état de rotation particulier de l'organe électronique. Cette durée ΔT' commence à partir d'une référence, ici, la référence est la valeur seuil 0, 2 du signal sinusoïdal de l'accélération radiale retranchée de la porteuse liée à la vitesse de rotation de l'ensemble monté. La valeur seuil est représentée par la courbe horizontale en trait pointillé 1001. Le franchissement par le haut de la valeur 0,2 incrémente un codeur. Si le codeur dépasse le nombre 2 au cours de la durée ΔT', cela signifie un changement d'état de l'organe électronique. Ici, on observe bien cet événement au cours de la période ΔT'. A la fin de la durée ΔT', l'organe électronique se met à émettre une signal radiofréquence sur un laps de temps ΔT. Ce signal radiofréquence comprend une information d'identification qui est ici le numéro de série de l'enveloppe pneumatique et le numéro de série de la roue qui ont été préalablement mis dans l'espace mémoire de 1 'organe électronique au cours de la constitution de l'ensemble monté.

La figure 3c est la réponse temporelle du signal de données de l'organe électronique représentatif d'un microphone. L'organe électronique est positionné initialement par rapport à un objet qui est une source de bruit blanc. L'organe électronique est monté sur un ensemble monté. On déplace transversalement la source de bruit blanc par rapport à l'ensemble monté de façon transversale à celui-ci et marquant un arrêt dans ce déplacement transversal. On part d'un position arrêt, on rapproche la source de bruit de l'ensemble monté. On marque le temps d'arrêt puis on écarte la source de bruit de l'organe électronique par le même chemin en l'éloignant de l'ensemble monté. L'éloignement est ici supérieur à la distance initiale entre la source de bruit et l'ensemble monté.

Ici, on, souhaite déterminer des changements entre deux états de l'organe électronique correspondant à la distance ce cet organe électronique à la source de bruit.

Le premier état correspond à une distance supérieure à une longueur critique LO et le second état correspond à une distance inférieure à cette même longueur critique. Une calibration du capteur de proximité que représente le microphone à déterminer que la distance critique LO correspond à une certaine amplitude du signal de données représentatif du microphone. Cette amplitude est représentée par la courbe horizontale en trait pointillé 1002 qui constitue une première valeur limite. De plus, dans ce cas, la simple détection de la première valeur limite ne suffit pas à lancer l'émission radiofréquence. Celle-ci est conditionnée à un effet retard. En effet, il faut que le signal dépasse la première valeur limite pendant une durée ΔT". Ceci permet de renforcer la certitude du dépassement de la longueur critique par une redondance d'informations. L'organe électronique, sachant que le changement d'état de l'organe entre l'état 1 et l'état 2 est atteint et que ce changement est un changement d'état prédéterminé, lance l'émission radiofréquence pendant un laps de temps ΔT.

Ensuite, l'organe électronique détecte le franchissement vers le bas de la première valeur limité qui, ici, correspond potentiellement au passage de l'état 2 vers l'état 1 de l'organe électronique. En effet, il faut que ce changement d'état perdure pendant une durée ΔT‴ pour valider ce changement d'état de l'organe électronique. Cependant ce changement d'état, de l'état 2 vers l'état 1 n'est pas un changement d'état prédéterminé. Bien que le changement d'état perdure, l'organe électronique n'émet donc pas de signal radiofréquence. Cependant, il est désormais dans l'état 1. Il attendra de revenir dans l'état 2 et les conditions nécessaires pour émettre un signal radiofréquence portant une information d'identification sur l'ensemble monté pendant le même laps de temps ΔT.

La Fig. 3d est un signal temporel en sortie d'un accéléromètre d'un organe électronique monté sur une enveloppe pneumatique d'un ensemble monté en condition de roulage. Ici, l'idée est d'identifier l'état de l'organe électronique entre un premier état 1 et un second état 2 correspondant à une vitesse de déplacement de l'organe électronique supérieure à une vitesse critique. Cette vitesse critique se traduit en termes d'accélération selon la direction radiale par une première valeur limite qui est proportionnelle au carré de la vitesse critique. Cette première valeur limite est représentée par la courbe horizontale 1003 en trait pointillé.

Au début de l'évolution temporelle, l'organe électronique est dans son état 1, l'amplitude du signal accélérométrique étant en dessous de la courbe 1003. Ensuite, l'accélération franchit par le haut la valeur définie par la courbe 1003. Cela est confirmé après une temporisation ΔTj, c'est-à-dire qu'au-delà de cette durée, l'amplitude du signal est toujours au-dessus de la courbe 1003, ce qui signifie que l'organe électronique a changé d'état et est passé dans l'état 2. L'organe électronique ayant ce changement d'état comme un changement d'état prédéterminé, il se met à émettre un signal radiofréquence comportant l'information d'identification de l'enveloppe pneumatique après la temporisation ΔTj. Cette émission est effectuée pendant le laps de temps ΔT au travers d'un signal émis périodiquement pendant ce laps de temps ΔT. Puis, l'organe électronique arrête son émission radiofréquence. Cependant au cours de ce temps, l'amplitude du signal de données franchit à la baisse la courbe 1003 avant de la franchir de nouveau à la hausse. Ce décrochement dans le signal de données est spécifique à l'enveloppe pneumatique en condition de roulage. En effet, lorsque l'accéléromètre de l'organe électronique se trouve dans l'aire de contact, correspondant au point matériel de l'enveloppe pneumatique en contact avec le sol, l'accéléromètre observe une accélération quasi nulle en raison de ce contact. Ce passage éphémère ne dure qu'une partie du tour de roue de l'enveloppe pneumatique, au plus 10 % de ce tour de roue. Temporellement, ce passage à la valeur quasi nulle de l'accéléromètre demeure une durée courte qui est fonction de la vitesse de l'enveloppe pneumatique. Pour ne pas induire en erreur l'organe électronique sur son état, il convient par exemple de définir une seconde temporisation ΔTi qui est fonction de la vitesse critique et des caractéristiques de l'enveloppe pneumatique afin que l'organe électronique ne prenne pas une décision intempestive et erronée en considérant que l'organe électronique est revenu à l'état 1. L'organe électronique analyse de nouveau l'amplitude du signal de données après cette temporisation ΔTi. Si celle-ci est de nouveau au-dessus de la courbe 1003, cela signifie que l'organe électronique est toujours dans son état initial, donc son état 2. S'il détecte que l'amplitude du signal est encore en dessous de la courbe 1003, il interprète que l'organe électronique est passé dans son état 1. Ici, le passage de l'état 2 à l'état 1 n'est pas un changement d'état prédéterminé de l'organe électronique, celui -ci ne se met pas à émettre un signal radiofréquence. Cependant, il est désormais dans l'état 1. La durée de l'état 1 de l'organe électronique attaché à l'enveloppe pneumatique est matérialisée par le rectangle de couleur blanche et la durée de l'état 2 par le rectangle de couleur noire.

## Revendications

1. Organe électronique (1) comprenant :
- Au moins un capteur de mouvement (4) dont le signal est sensible au mouvement de l'organe électronique (1) et /ou au moins un capteur de proximité (4') dont le signal est sensible à la distance dudit capteur par rapport à un objet extérieur à l'organe électronique (1) ;
- Un microprocesseur (2) couplé à l'au moins un capteur de mouvement (4) et/ou à l'au moins un capteur de proximité (4') pour constituer un signal de données ;
- Un espace mémoire (5, 5a, 5b) connecté au microprocesseur (2) pour stocker d'une part au moins une partie du signal de données représentatif du au moins un capteur (4, 4') et d'autre part au moins une information d'identification ;
- Une source d'énergie (3) ; et
- Un émetteur de radiocommunication (6) connecté au microprocesseur (2) ;
dans lequel le microprocesseur (2) est apte à définir au moins deux états de l'organe électronique à partir de l'au moins une partie du signal de données, l'espace mémoire contient au moins un changement d'état prédéterminé qui est défini à partir des au moins deux états de l'organe électronique, le microprocesseur (2) est apte, lorsque le microprocesseur (2) a détecté le au moins un changement d'état prédéterminé de l'organe électronique, à émettre la au moins une information d'identification par l'intermédiaire d'un signal radiofréquence émis pendant un laps de temps ΔT puis stopper l'émission du signal radiofréquence au terme dudit laps de temps ΔT, **caractérisé en ce que** le laps de temps ΔT d'émission du signal radiofréquence est comprise entre 20 secondes et 10 minutes, préférentiellement entre 30 secondes et 7 minutes, très préférentiellement entre 1 minute et 5 minutes.

2. Organe électronique selon la revendication 1 dans lequel, l'amplitude de la au moins une partie du signal de données constituant une information servant à déterminer l'état de l'organe électronique, chaque état de l'organe électronique étant limité, sur la au moins une partie du signal de données, par au moins une première valeur limite et l'organe électronique étant dans un état donné, le franchissement de la au moins une première valeur limite par au moins une valeur de la au moins une partie du signal de données caractérise le changement d'état de l'organe électronique.

3. Organe électronique selon la revendication 2 dans lequel, la au moins une première valeur limite est une valeur définie à partir d'au moins une distance critique ou une vitesse critique ou une accélération critique.

4. Organe électronique selon la revendication 1 dans lequel, la répétition d'un motif sur la au moins une partie du signal de données constituant une information servant à déterminer l'état de l'organe électronique, et l'organe électronique étant dans un état donné, le franchissement d'un nombre N de motifs observés pendant une durée ΔT' sur la au moins une partie du signal de données caractérise un changement d'état de l'organe électronique.

5. Organe électronique selon la revendication 4 dans lequel, la durée ΔT' est proportionnelle à l'inverse d'une seconde vitesse critique de l'organe électronique.

6. Organe électronique selon l'une des revendications 1 à 5 dans lequel, le au moins un capteur de mouvement (4) est compris dans le groupe comprenant les capteurs inertiels, comme l'accéléromètre, le gyromètre, le gyroscope, et les capteurs angulaires comme le codeur rotatif et le magnétomètre.

7. Organe électronique selon l'une des revendications 1 à 5 dans lequel, le au moins un capteur de proximité (4') est compris dans le groupe comprenant les capteurs optiques tels que les capteurs photoélectriques ou cellules photoconductrices ou photodiodes, les capteurs électromagnétiques comme par exemple les capteurs à effet Hall, les capteurs inductifs comme les capteurs à reluctance variable ou à courant de Foucault, les capteurs capacitifs, les capteurs acoustiques comme par exemple les capteurs ultrasons ou les microphones, les capteurs micro-ondes et les boutons-poussoirs.

8. Organe électronique selon l'une des revendications 1 à 7 dans lequel, l'émission du signal radiofréquence au cours du laps de temps ΔT s'effectue périodiquement selon une période T, préférentiellement comprise entre 0,5 secondes et 1 minute.

9. Organe électronique selon la revendication 8 dans lequel, la période T est définie selon l'état de l'organe électronique.

10. Organe électronique selon l'une des revendications 1 à 9 dans lequel, le signal radiofréquence a une fréquence d'émission compris entre 2400 et 2482 MHz.

11. Enveloppe pneumatique (100) comprenant un organe électronique selon l'une des revendications 1 à 10 monté solidairement sur ladite enveloppe pneumatique et dans lequel la au moins une information d'identification est comprise dans le groupe comprenant le numéro de série de l'enveloppe pneumatique, l'identité de l'enveloppe pneumatique, le numéro de série de l'organe électronique et l'identité de l'organe électronique.

12. Bande transporteuse comprenant un organe électronique selon l'une des revendications 1 à 10 monté solidairement sur ladite bande transporteuse et dans lequel la au moins une information d'identification est comprise dans le groupe comprenant le numéro de série de la bande transporteuse, l'identité de la bande transporteuse, le numéro de série de l'organe électronique et l'identité de l'organe électronique.

13. Chenille comprenant un organe électronique selon l'une des revendications 1 à 10 monté solidairement sur ladite chenille et dans lequel la au moins une information d'identification est comprise dans le groupe comprenant le numéro de série de la chenille, l'identité de la chenille, le numéro de série de l'organe électronique et l'identité de l'organe électronique.

14. Ensemble monté comprenant un organe électronique selon l'une des revendications 1 à 10 monté solidairement dans lequel, la au moins une information d'identification est comprise dans le groupe comprenant le numéro de série de l'enveloppe pneumatique, l'identité de l'enveloppe pneumatique, le numéro de série de la roue, l'identité de la roue, le numéro de série de l'organe électronique et l'identité de l'organe électronique.

## Patentansprüche

1. Elektronisches Element (1), welches umfasst:
- mindestens einen Bewegungssensor (4), dessen Signal von der Bewegung des elektronischen Elements (1) abhängig ist, und/oder mindestens einen Näherungssensor (4'), dessen Signal vom Abstand des Sensors von einem Objekt außerhalb des elektronischen Elements (1) abhängig ist;
- einen Mikroprozessor (2), der mit dem mindestens einen Bewegungssensor (4) und/oder mit dem mindestens einen Näherungssensor (4') gekoppelt ist, um ein Datensignal zu erstellen;
- einen Speicherraum (5, 5a, 5b), der mit dem Mikroprozessor (2) verbunden ist, um einerseits wenigstens einen Teil des für den mindestens einen Sensor (4, 4') repräsentativen Datensignals und andererseits mindestens eine Identifikationsinformation zu speichern;
- eine Energiequelle (3); und
- einen Funkkommunikationssender (6), der mit dem Mikroprozessor (2) verbunden ist;
wobei der Mikroprozessor (2) geeignet ist, anhand des wenigstens eines Teils des Datensignals mindestens zwei Zustände des elektronischen Elements zu definieren, der Speicherraum mindestens eine vorbestimmte Zustandsänderung enthält, die anhand der mindestens zwei Zustände des elektronischen Elements definiert ist, der Mikroprozessor (2) geeignet ist, wenn der Mikroprozessor (2) die mindestens eine vorbestimmte Zustandsänderung des elektronischen Elements erkannt hat, die mindestens eine Identifikationsinformation durch ein Funksignal zu senden, das während einer Zeitdauer ΔT gesendet wird, und dann das Senden des Signals am Ende der Zeitdauer ΔT zu beenden, **dadurch gekennzeichnet, dass** die Zeitdauer ΔT des Funksignals zwischen 20 Sekunden und 10 Minuten, vorzugsweise zwischen 30 Sekunden und 7 Minuten, stärker bevorzugt zwischen 1 Minute und 5 Minuten beträgt.

2. Elektronisches Element nach Anspruch 1, wobei, wenn die Amplitude des wenigstens eines Teils des Datensignals eine Information darstellt, die dazu dient, den Zustand des elektronischen Elements zu bestimmen, wobei jeder Zustand des elektronischen Elements auf dem wenigstens einen Teil des Datensignals durch mindestens einen ersten Grenzwert begrenzt ist und das elektronische Element sich in einem gegebenen Zustand befindet, die Überschreitung des mindestens einen ersten Grenzwertes durch mindestens einen Wert des wenigstens einen Teils des Datensignals die Zustandsänderung des elektronischen Elements charakterisiert.

3. Elektronisches Element nach Anspruch 2, wobei der mindestens eine erste Grenzwert ein Wert ist, der anhand mindestens eines kritischen Abstands oder einer kritischen Geschwindigkeit oder einer kritischen Beschleunigung definiert ist.

4. Elektronisches Element nach Anspruch 1, wobei, wenn die Wiederholung eines Musters auf dem wenigstens einen Teil des Datensignals eine Information darstellt, die dazu dient, den Zustand des elektronischen Elements zu bestimmen, und das elektronische Element sich in einem gegebenen Zustand befindet, die Überschreitung einer Anzahl N von Mustern, die während einer Dauer ΔT' auf dem wenigstens einen Teil des Datensignals beobachtet werden, eine Zustandsänderung des elektronischen Elements charakterisiert.

5. Elektronisches Element nach Anspruch 4, wobei die Dauer ΔT' proportional zum Inversen einer zweiten kritischen Geschwindigkeit des elektronischen Elements ist.

6. Elektronisches Element nach einem der Ansprüche 1 bis 5, wobei der mindestens eine Bewegungssensor (4) zu der Gruppe gehört, welche die Inertialsensoren, wie den Beschleunigungsmesser, das Gyrometer, das Gyroskop, und die Winkelsensoren, wie den Drehgeber und das Magnetometer, umfasst.

7. Elektronisches Element nach einem der Ansprüche 1 bis 5, wobei der mindestens eine Näherungssensor (4') zu der Gruppe gehört, welche die optischen Sensoren wie die photoelektrischen Sensoren oder Photowiderstandszellen oder Photodioden, die elektromagnetischen Sensoren wie zum Beispiel die Hall-Sensoren, die induktiven Sensoren wie die Sensoren mit variabler Reluktanz oder die Wirbelstromsensoren, die kapazitiven Sensoren, die akustischen Sensoren wie zum Beispiel die Ultraschallsensoren oder die Mikrofone, die Mikrowellensensoren und die Drucktasten umfasst.

8. Elektronisches Element nach einem der Ansprüche 1 bis 7, wobei das Senden des Funksignals während der Zeitdauer ΔT periodisch mit einer Periode T erfolgt, die vorzugsweise zwischen 0,5 Sekunden und 1 Minute beträgt.

9. Elektronisches Element nach Anspruch 8, wobei die Periode T gemäß dem Zustand des elektronischen Elements definiert wird.

10. Elektronisches Element nach einem der Ansprüche 1 bis 9, wobei das Funksignal eine Sendefrequenz zwischen 2400 und 2482 MHz aufweist.

11. Luftreifen (100), welcher ein elektronisches Element nach einem der Ansprüche 1 bis 10 umfasst, das fest an dem Luftreifen angebracht ist, und wobei die mindestens eine Identifikationsinformation zu der Gruppe gehört, welche die Seriennummer des Luftreifens, die Identität des Luftreifens, die Seriennummer des elektronischen Elements und die Identität des elektronischen Elements umfasst.

12. Förderband, welches ein elektronisches Element nach einem der Ansprüche 1 bis 10 umfasst, das fest an dem Förderband angebracht ist, und wobei die mindestens eine Identifikationsinformation zu der Gruppe gehört, welche die Seriennummer des Förderbandes, die Identität des Förderbandes, die Seriennummer des elektronischen Elements und die Identität des elektronischen Elements umfasst.

13. Raupenkette, welche ein elektronisches Element nach einem der Ansprüche 1 bis 10 umfasst, das fest an der Raupenkette angebracht ist, und wobei die mindestens eine Identifikationsinformation zu der Gruppe gehört, welche die Seriennummer der Raupenkette, die Identität der Raupenkette, die Seriennummer des elektronischen Elements und die Identität des elektronischen Elements umfasst.

14. Montierte Anordnung, welche ein fest angebrachtes elektronisches Element nach einem der Ansprüche 1 bis 10 umfasst, wobei die mindestens eine Identifikationsinformation zu der Gruppe gehört, welche die Seriennummer des Luftreifens, die Identität des Luftreifens, die Seriennummer des Rades, die Identität des Rades, die Seriennummer des elektronischen Elements und die Identität des elektronischen Elements umfasst.

## Claims

1. Electronic member (1) comprising:
- At least one movement sensor (4) whose signal is sensitive to the movement of the electronic member (1) and/or at least one proximity sensor (4') whose signal is sensitive to the distance of said sensor from an object outside the electronic member (1);
- A microprocessor (2) coupled to the at least one movement sensor (4) and/or to the at least one proximity sensor (4') to create a data signal;
- A storage area (5, 5a, 5b) connected to the microprocessor (2) for storing, on the one hand, at least a part of the data signal representative of the at least one sensor (4, 4'), and, on the other hand, at least one identification information element;
- An energy source (3); and
- A radio transmitter (6) connected to the microprocessor (2);
in which the microprocessor (2) is capable of defining at least two states of the electronic member on the basis of the at least one part of the data signal, the storage area contains at least one predetermined change of state which is defined on the basis of the at least two states of the electronic member, the microprocessor (2) is capable, when the microprocessor (2) has detected the at least one predetermined change of state of the electronic member, of transmitting the at least one identification information element via a radiofrequency signal transmitted during a time interval ΔT and then stopping the transmission of the radiofrequency signal at the end of said time interval ΔT, **characterized in that** the time interval ΔT of the transmission of the radiofrequency signal is between 20 seconds and 10 minutes, preferably between 30 seconds and 7 minutes, or very preferably between 1 minute and 5 minutes.

2. Electronic member according to Claim 1, wherein, the amplitude of the at least one part of the data signal constituting an information element for determining the state of the electronic member, each state of the electronic member being limited, in the at least one part of the data signal, by at least a first limit value, and the electronic member being in a given state, the crossing of the at least a first limit value by at least one value of the at least one part of the data signal characterizes the change of state of the electronic member.

3. Electronic member according to Claim 2, wherein the at least a first limit value is a value defined on the basis of at least a critical distance or a critical velocity or a critical acceleration.

4. Electronic member according to Claim 1, wherein, the repetition of a pattern in the at least one part of the data signal constituting an information element for determining the state of the electronic member, and the electronic member being in a given state, the exceeding of a number N of patterns observed during a period ΔT' in the at least one part of the data signal characterizes a change of state of the electronic member.

5. Electronic member according to Claim 4, wherein the period ΔT' is proportional to the inverse of a second critical velocity of the electronic member.

6. Electronic member according to any of Claims 1 to 5, wherein the at least one movement sensor (4) is included in the group comprising inertial sensors, such as the accelerometer, the gyroscope sensor, the gyroscope, and angular sensors such as the rotary encoder and the magnetometer.

7. Electronic member according to any of Claims 1 to 5, wherein the at least one proximity sensor (4') is included in the group comprising optical sensors such as photoelectric sensors or photoconductive cells or photodiodes, electromagnetic sensors such as Hall effect sensors, inductive sensors such as variable reluctance or Foucault current sensors, capacitive sensors, acoustic sensors such as ultrasonic sensors or microphones, microwave sensors and push buttons.

8. Electronic member according to any of Claims 1 to 7, wherein the transmission of the radiofrequency signal during the time interval ΔT takes place periodically over a period T which is preferably between 0.5 second and 1 minute.

9. Electronic member according to Claim 8, wherein the period T is defined according to the state of the electronic member.

10. Electronic member according to any of Claims 1 to 9, wherein the radiofrequency signal has a transmission frequency of between 2400 and 2482 MHz.

11. Tyre casing (100) comprising an electronic member according to any of Claims 1 to 10, mounted integrally on said tyre casing, in which the at least one identification information element is included in the group comprising the serial number of the tyre casing, the identity of the tyre casing, the serial number of the electronic member and the identity of the electronic member.

12. Conveyor belt comprising an electronic member according to any of Claims 1 to 10, mounted integrally on said conveyor belt, in which the at least one identification information element is included in the group comprising the serial number of the conveyor belt, the identity of the conveyor belt, the serial number of the electronic member and the identity of the electronic member.

13. Track comprising an electronic member according to any of Claims 1 to 10, mounted integrally on said track, in which the at least one identification information element is included in the group comprising the serial number of the track, the identity of the track, the serial number of the electronic member and the identity of the electronic member.

14. Mounted assembly comprising an electronic member according to any of Claims 1 to 10, mounted integrally, in which the at least one identification information element is included in the group comprising the serial number of the tyre casing, the identity of the tyre casing, the serial number of the wheel, the identity of the wheel, the serial number of the electronic member and the identity of the electronic member.
